# EUROPEAN PATENT APPLICATION

(11) **EP 4 847 555 A1**
(43) Date of publication of application: **02.12.2026**
(21) Application number: 24920120.3
(22) Date of filing: 25.11.2024
(51) Int. Cl.: C08J 5/04, C08G 69/26, C08K 7/02, C08L 77/06

(54) **FIBER-REINFORCED COMPOSITE MATERIAL AND MOLDED ARTICLE**

(30) Priority: 22.01.2024 JP 2024007470
(71) Applicant: MITSUBISHI GAS CHEMICAL COMPANY, INC., Chiyoda-ku Tokyo 100-8324 (JP)
(72) Inventor: ITO, Keisuke, Hiratsuka-shi, Kanagawa 254-0016 (JP)
(74) Representative: Vossius & Partner Patentanwälte Rechtsanwälte mbB
(86) International application number: PCT/JP2024/041570
(87) International publication number: WO 2025/158763

(57) **Abstract**

Provided are a fiber-reinforced composite material and a formed article. The fiber-reinforced composite material contains from 100 to 200 parts by mass of continuous reinforcing fibers per 100 parts by mass of a polyamide resin. The polyamide resin contains diamine units and dicarboxylic acid units, 70 mol% or more of the diamine units are derived from a xylylenediamine, and 70 mol% or more of the dicarboxylic acid units are derived from an α,ω-linear aliphatic dicarboxylic acid having from 11 to 20 carbons.

## Description

### Technical Field

The present invention relates to a fiber-reinforced composite material and a formed article. In particular, the present invention relates to a fiber-reinforced composite material in which a prescribed polyamide resin is used.

### Background Art

In recent years, there has been an increasing demand for fiber-reinforced composite materials that use thermoplastic resins and reinforcing fibers, including carbon fiber-reinforced thermoplastic (CFRTP) resins.

Among thermoplastic resins, polyamide 6, polyamide 66, and polyamide 12 are often used as matrix resins for CFRTP (Patent Document 1, etc.).

In addition, fiber-reinforced composite materials that use a polyamide resin constituted of adipic acid or sebacic acid and a xylylenediamine are also being examined (Patent Document 2, etc.).

### Citation List

### Patent Document

Patent Document 1: JP 2023-147962 A
Patent Document 2: WO 2020/174871 A

### Summary of Invention

### Technical Problem

Here, the present inventors examined Patent Document 1 and found that the interlaminar shear strength of the fiber-reinforced composite material obtained by using polyamide 6 or polyamide 66 is significantly reduced after water absorption. On the other hand, when polyamide 12 is used, while the interlaminar shear strength after water absorption can be suppressed, the value of the interlaminar shear strength itself (initial interlaminar shear strength) is low.

Meanwhile, in an examination of Patent Document 2, the present inventors found that a polyamide resin constituted of sebacic acid and a xylylenediamine can retain a significantly higher interlaminar shear strength after water absorption than that of polyamide 6 or polyamide 66. Furthermore, the initial interlaminar shearing is significantly higher than that in the case of using polyamide 12.

However, with recent advances in technology, a demand has arisen for a fiber-reinforced composite material that has a high initial interlaminar shear strength and a further improved retention rate of interlaminar shear strength after water absorption.

Thus, the present invention aims to solve the above problems, and an object of the present invention is to provide a fiber-reinforced composite material having a high initial interlaminar shear strength and a further improved retention rate of interlaminar shear strength after water absorption, and to provide a formed article of the same.

### Solution to Problem

In light of the above problems, the present inventors have conducted an examination, and as a result, have discovered that the above problems can be solved by using a prescribed polyamide resin.

Specifically, the above-described problems are solved by the following means.
<1> A fiber-reinforced composite material containing from 100 to 200 parts by mass of continuous reinforcing fibers per 100 parts by mass of a polyamide resin, wherein
   the polyamide resin contains diamine units and dicarboxylic acid units,
   70 mol% or more of the diamine units are derived from a xylylenediamine, and
   70 mol% or more of the dicarboxylic acid units are derived from an α,ω-linear aliphatic dicarboxylic acid having from 11 to 20 carbons.
<2> The fiber-reinforced composite material according to <1>, wherein 70 mol% or more of the dicarboxylic acid units are derived from dodecanedioic acid and/or tetradecanedioic acid.
<3> The fiber-reinforced composite material according to <1>, wherein 70 mol% or more of the dicarboxylic acid units are derived from dodecanedioic acid.
<4> The fiber-reinforced composite material according to any one of <1> to <3>, wherein from 20 to 100 mol% of the diamine units are derived from meta-xylylenediamine, and from 80 to 0 mol% of the diamine units are derived from para-xylylenediamine (provided that a total does not exceed 100 mol%).
<5> The fiber-reinforced composite material according to <1>, wherein 70 mol% or more of the dicarboxylic acid units are derived from dodecanedioic acid and/or tetradecanedioic acid, and
   from 20 to 100 mol% of the diamine units are derived from meta-xylylenediamine, and from 80 to 0 mol% of the diamine units are derived from para-xylylenediamine.
<6> The fiber-reinforced composite material according to any one of <1> to <5>, wherein the continuous reinforcing fibers contain at least one type selected from the group consisting of carbon fibers, glass fibers, and aramid fibers.
<7> The fiber-reinforced composite material according to any one of <1> to <6>, wherein the continuous reinforcing fibers have a number average fiber length of more than 10 mm.
<8> The fiber-reinforced composite material according to any one of <1> to <7>, wherein the fiber-reinforced composite material is a prepreg.
<9> The fiber-reinforced composite material according to <8>, wherein the fiber-reinforced composite material is a prepreg in which the continuous reinforcing fibers are oriented in one direction, and the continuous reinforcing fibers are impregnated with the polyamide resin.
<10> The fiber-reinforced composite material according to <8>, wherein the fiber-reinforced composite material is a prepreg in which the continuous reinforcing fibers are a woven fabric, and the continuous reinforcing fibers are impregnated with the polyamide resin.
<11> A formed article formed from the fiber-reinforced composite material described in any one of <1> to <10>.

### Advantageous Effects of Invention

According to the present invention, a fiber-reinforced composite material and a formed article can be provided in which the initial interlaminar shear strength is high and the retention rate of the interlaminar shear strength after water absorption is further improved.

### Description of Embodiments

Embodiments for carrying out the present invention (hereinafter referred to simply as "the present embodiment") will be described below in detail. The present embodiment described below is an example for explaining the present invention, and the present invention is not limited only to the present embodiment.

In the present specification, numerical values described before and after the term "to" are respectively the lower limit and the upper limit of a range including the numerical values. In addition, any combination of upper and lower limits of the numerical values in the present specification is an example of the present embodiment.

In the present specification, various physical property values and characteristic values are those at 23°C unless otherwise noted.

When the measurement methods or the like explained in the standards presented in the present specification differ depending on the year, the measurement methods or the like are based on the standards as of January 1, 2024, unless otherwise noted. Moreover, if a measurement method or the like explained in the standards presented in the present specification has been discontinued as of Jan. 1, 2024, the measurement method or the like is based on the standard at the time of discontinuation.

A fiber-reinforced composite material of the present embodiment is characterized by containing from 100 to 200 parts by mass of continuous reinforcing fibers per 100 parts by mass of a polyamide resin, and is also characterized in that the polyamide resin contains diamine units and dicarboxylic acid units, 70 mol% or more of the diamine units are derived from a xylylenediamine, and 70 mol% or more of the dicarboxylic acid units are derived from an α,ω-linear aliphatic dicarboxylic acid having from 11 to 20 carbons.

Through such a configuration, a fiber-reinforced composite material and a formed article can be provided in which the initial interlaminar shear strength is high and the retention rate of the interlaminar shear strength after water absorption is further improved.

As described above, a fiber-reinforced composite material that uses a polyamide resin constituted of sebacic acid and xylylenediamine exhibits high interlaminar shear strength both in the initial stage and after water absorption. However, recent technological innovations have led to a demand for fiber-reinforced composite materials having even higher interlaminar shear strength after water absorption. Under such circumstances, the present inventors conducted examinations and discovered that the decrease in interlaminar shear strength after water absorption can be effectively suppressed by using a polyamide resin that contains an α,ω-linear aliphatic dicarboxylic acid having from 11 to 20 carbons instead of sebacic acid. As demonstrated in the examples described below, it was found that when the polyamide resin stipulated in the present embodiment is used, the reduction rate of the interlaminar shear strength after water absorption is about 3%, whereas when a polyamide resin constituted of sebacic acid and a xylylenediamine is used, the reduction rate of the interlaminar shear strength after water absorption is about 7%. The interlaminar shear strength varies depending on the state of the interface between the polyamide resin and the reinforcing fibers, but it was speculated that this influence is greater in a polyamide resin that uses sebacic acid and is smaller in a polyamide resin that uses a dicarboxylic acid having a larger number of carbons. In particular, it was speculated that when continuous reinforcing fibers are used as the reinforcing fibers, the tendency for changes in physical properties to occur changes significantly as compared with a case of using short fibers.

As a result, it is presumed that a fiber-reinforced composite material is obtained in which the initial interlaminar shear strength is high and the retention rate of interlaminar shear strength after water absorption is further improved. Furthermore, it was found that a decrease in the flexural strength after water absorption can be effectively suppressed by adopting the polyamide resin used in the present embodiment.

Hereinafter, details of the present embodiment will be described.

### <Polyamide Resin>

The fiber-reinforced composite material of the present embodiment contains a polyamide resin (hereinafter, may be referred to as a "xylylenediamine-based polyamide resin") that includes diamine units and dicarboxylic acid units, with 70 mol% or more of the diamine units being derived from a xylylenediamine, and 70 mol% or more of the dicarboxylic acid units being derived from an α,ω-linear aliphatic dicarboxylic acid having from 11 to 20 carbons.

In the xylylenediamine-based polyamide resin, preferably 75 mol% or more, more preferably 80 mol% or more, even more preferably 90 mol% or more, yet even more preferably 95 mol% or more, and particularly preferably 99 mol% or more of the diamine units are derived from a xylylenediamine (preferably para-xylylenediamine and/or meta-xylylenediamine).

The xylylenediamine is preferably para-xylylenediamine and/or meta-xylylenediamine. The xylylenediamine preferably includes from 0 to 100 mol% of meta-xylylenediamine and from 100 to 0 mol% of para-xylylenediamine (provided that the total of the meta-xylylenediamine and para-xylylenediamine does not exceed 100 mol%), more preferably includes from 20 to 100 mol% of meta-xylylenediamine and from 80 to 0 mol% of para-xylylenediamine, and even more preferably includes from 35 to 100 mol% of meta-xylylenediamine and from 65 to 0 mol% of para-xylylenediamine. When the proportion of meta-xylylenediamine is 20 mol% or more, the melting point tends to be suppressed and the balance between processability and physical properties tends to be improved.

In the xylylenediamine-based polyamide resin, the total of para-xylylenediamine units and meta-xylylenediamine units accounts for preferably 80 mol% or more, more preferably 85 mol% or more, still more preferably 90 mol% or more, yet even more preferably 95 mol% or more, even still more preferably 98 mol% or more, and yet even still more preferably 99 mol% or more of the diamine units. The upper limit of the total of para-xylylenediamine units and meta-xylylenediamine units is 100 mol%.

Examples of the diamine that can be used as a raw material diamine component of the xylylenediamine-based polyamide resin, other than meta-xylylenediamine and para-xylylenediamine, include an aliphatic diamine, such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethylhexamethylenediamine, or 2,4,4-trimethylhexamethylenediamine; an alicyclic diamine, such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, or bis(aminomethyl)tricyclodecane; and a diamine having an aromatic ring, such as bis(4-aminophenyl)ether, para-phenylenediamine, or bis(aminomethyl)naphthalene. One of these diamines, or a mixture of two or more of these diamines may be used.

On the other hand, preferably 75 mol% or more, more preferably 80 mol% or more, still more preferably 85 mol% or more, even more preferably 90 mol% or more, even still more preferably 95 mol% or more, and particularly even more preferably 99 mol% or more of the dicarboxylic acid units of the xylylenediamine-based polyamide resin are derived from an α,ω-linear aliphatic dicarboxylic acid having from 11 to 20 carbons.

The α,ω-linear aliphatic dicarboxylic acid having from 11 to 20 carbon is preferably used as a raw material dicarboxylic acid component of the xylylenediamine-based polyamide resin, and is preferably an α,ω-linear aliphatic dicarboxylic acid having from 11 to 16 carbons or an α,ω-linear aliphatic dicarboxylic acid having from 12 to 14 carbons.

The α,ω-linear aliphatic dicarboxylic acid having from 11 to 20 carbons is specifically dodecanedioic acid, tridecanedioic acid, tetradecanedioic acid, or the like, and among these, from the perspective of the melting point of the polyamide resin falling within an appropriate range for molding, at least one of dodecanedioic acid and/or tetradecanedioic acid is preferable, and dodecanedioic acid is more preferable.

Examples of the dicarboxylic acid component other than the above include α,ω-linear aliphatic dicarboxylic acids having 10 or less carbons, such as adipic acid and sebacic acid; phthalic acid compounds such as isophthalic acid, terephthalic acid, and orthophthalic acid; and naphthalenedicarboxylic acid isomers such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One of these can be used, or two or more thereof can be mixed and used.

Note that the xylylenediamine-based polyamide resin is constituted using diamine units and dicarboxylic acid units as main components, but structural units other than these are not entirely excluded, and of course, the xylylenediamine-based polyamide resin may contain a lactam such as ε-caprolactam or laurolactam, and an aliphatic aminocarboxylic acid unit such as aminocaproic acid or aminoundecanoic acid. Here, the term main component means a component having the largest total number of diamine units and dicarboxylic acid units among all the structural units constituting the xylylenediamine-based polyamide resin. In the present embodiment, the total of the diamine units and the dicarboxylic acid units in the xylylenediamine-based polyamide resin preferably accounts for 90 mass% or more, more preferably 95 mass% or more, still more preferably 97 mass% or more, and further preferably 99 mass% or more, of all the structural units.

The xylylenediamine-based polyamide resin preferably uses a polyamide resin (biomass polyamide resin) produced by using a biomass raw material. Use of a biomass polyamide resin can reduce the environmental load.

Moreover, the xylylenediamine-based polyamide resin can also use a raw material monomer that has been mass balance certified (ISCC PLUS). Mass balance certification means that degrees of usage of recyclable raw materials and raw biomaterials for each factory or production facility and degrees of production and shipment of products are quantified and guaranteed together with quality.

The melting point of the xylylenediamine-based polyamide resin is preferably 150°C or higher, more preferably 160°C or higher, still more preferably 170°C or higher, and further preferably 180°C or higher, and is preferably 300°C or lower, more preferably 280°C or lower, still more preferably 260°C or lower, and further preferably 205°C or lower. The melting point is measured in accordance with the description in the Examples section described below.

In a case in which a commingled yarn of the present embodiment contains two or more types of xylylenediamine-based polyamide resins, the melting point is the weighted average value of each polyamide resin.

The lower limit of the number average molecular weight (Mn) of the xylylenediamine-based polyamide resin is preferably 6000 or greater, more preferably 8000 or greater, and even more preferably 10000 or greater, and is preferably 100000 or less, and more preferably 50000 or less. When the number average molecular weight is in such a range, the heat resistance, modulus of elasticity, dimensional stability, and molding processability of the obtained formed article are further improved.

The number average molecular weight is a value in terms of polystyrene as measured by gel permeation chromatography (GPC). More specifically, the number average molecular weight can be measured in accordance with the description in paragraph [0047] of JP 2018-165298 A, the content of which is incorporated herein by reference.

The fiber-reinforced composite material of the present embodiment may contain a polyamide resin in addition to the xylylenediamine-based polyamide resin. Examples of the polyamide resin besides the xylylenediamine-based polyamide resin include aliphatic polyamide resins and semi-aromatic polyamide resins other than the xylylenediamine-based polyamide resin.

Examples of the aliphatic polyamide resin include polyamide 4, polyamide 46, polyamide 6, polyamide 66, polyamide 666, polyamide 610, polyamide 11, and polyamide 12.

Examples of the semi-aromatic polyamide resin include a terephthalic acid-based polyamide resin (polyamide 6T, polyamide 9T, and polyamide 10T) and a below-described xylylenediamine-based polyamide resin.

The content of the polyamide resins (the total content of the xylylenediamine-based polyamide resin and other polyamide resins besides the xylylenediamine-based polyamide resin) in 100 mass% of the fiber-reinforced composite material of the present embodiment is preferably 25 mass% or more, more preferably 30 mass% or more, and still more preferably 32 mass% or more, and is 50 mass% or less, preferably 48 mass% or less, more preferably 45 mass% or less, and still more preferably 40 mass% or less.

The fiber-reinforced composite material of the present embodiment may contain only a single type of polyamide resin, or may contain two or more types of polyamide resins. When two or more types are contained, the total amount is preferably in the range described above.

In addition, the fiber-reinforced composite material of the present embodiment may be configured to contain substantially no polyamide resin other than the xylylenediamine-based polyamide resin. Substantially not containing any other polyamide resin means that the content of additional polyamide resins contained in the fiber-reinforced composite material is preferably less than 10 mass%, more preferably less than 5 mass%, even more preferably less than 3 mass%, and still more preferably less than 1 mass%, of the content of the continuous reinforcing fibers.

### <Continuous Reinforcing Fibers>

The fiber-reinforced composite material of the present embodiment contains continuous reinforcing fibers. The continuous reinforcing fibers are reinforcing fibers having an average fiber length exceeding 6 mm, and the average fiber length thereof is preferably more than 10 mm, more preferably more than 12 mm, further preferably 30 mm or more, and even more preferably 10 cm or more. The average fiber length of the continuous reinforcing fibers for use in the present embodiment is not particularly limited, but from the viewpoint of improving molding processability, the average fiber length thereof is preferably 1 m or more, more preferably 100 m or more, and still more preferably 1000 m or more, and is preferably 20000 m or less, more preferably 10000 m or less, and still more preferably 7000 m or less.

Examples of the continuous reinforcing fibers include inorganic fibers, such as glass fibers, carbon fibers, metal fibers, boron fibers, basalt fibers, and ceramic fibers; and organic fibers, such as aramid fibers, polyoxymethylene fibers, aromatic polyamide fibers, polyparaphenylene benzobisoxazole fibers, and ultra-high molecular weight polyethylene fibers. Among these, the continuous reinforcing fibers are preferably at least one selected from the group consisting of carbon fibers, glass fibers, and aramid fibers, and are more preferably carbon fibers.

Examples of the carbon fibers include polyacrylonitrilebased carbon fibers and pitch-based carbon fibers.

As the glass fibers, fibers obtained by melt spinning glass such as E glass, C glass, A glass, S glass, and alkali-resistant glass, which are ordinarily supplied, are used.

The continuous reinforcing fibers may be surface treated with a surface treatment agent.

The cross section of the continuous reinforcing fiber may be either circular or non-circular.

As details regarding the continuous carbon fibers, reference can be made to the description in paragraph [0074] of JP 7398028 B, the contents of which are incorporated in the present specification by reference.

The form of the continuous reinforcing fibers is not particularly limited, but at least, the continuous reinforcing fibers are preferably oriented in one direction.

An example of the continuous reinforcing fibers in the present embodiment is one in which the continuous reinforcing fibers are oriented in one direction. An example in which the continuous reinforcing fibers are oriented in one direction is a continuous reinforcing fiber roving that has been opened.

In another example of the continuous reinforcing fibers in the present embodiment, the continuous reinforcing fibers are a woven fabric. Examples of the woven fabric include plain weave, twill weave, and satin weave fabrics.

When the continuous reinforcing fibers are carbon fibers, the tensile strength is preferably 1500 MPa or greater, more preferably 2500 MPa or greater, and even more preferably 3500 MPa or greater. There is no particular upper limit to the tensile strength in this case, but a tensile strength of 8000 MPa or less is practical. In the case of glass fibers, the tensile strength is preferably 800 MPa or greater, more preferably 1800 MPa or greater, and even more preferably 2800 MPa or greater. There is also no particular upper limit to the tensile strength in the case of glass fibers, but a tensile strength of 5000 MPa or less is practical.

In relation to 100 parts by mass of the polyamide resin, the content of the continuous reinforcing fibers in the fiber-reinforced composite material of the present embodiment is 100 parts by mass or greater, more preferably 100 parts by mass or greater, even more preferably 120 parts by mass or greater, and still more preferably 130 parts by mass or greater, and is 200 parts by mass of less, preferably 190 parts by mass or less, more preferably 180 parts by mass or less, even more preferably 170 parts by mass or less, and yet even more preferably 160 parts by mass or less. When the content of the continuous reinforcing fibers is equal to or greater than the above lower limit value, the molding time tends to be further shortened. Moreover, when the content of the continuous reinforcing fibers is equal to or less than the above upper limit value, the carbon fiber content percentage in the composite material can be increased, and the mechanical properties of the resulting formed article tend to improve.

The fiber-reinforced composite material of the present embodiment may contain only a single type of continuous reinforcing fibers, or may contain two or more types thereof. When two or more types are contained, the total amount is preferably in the range described above.

The fiber-reinforced composite material of the present embodiment may or may not contain a filler besides the continuous reinforcing fibers.

One example of the fiber-reinforced composite material of the present embodiment is substantially free of fillers other than the continuous reinforcing fibers. The wording "substantially free" means that the content of other fillers in the fiber-reinforced composite material is preferably less than 10 mass%, more preferably less than 5 mass%, even more preferably less than 3 mass%, and still more preferably less than 1 mass%, of the content of the continuous reinforcing fibers.

### <Other Components>

The fiber-reinforced composite material of the present embodiment may or may not contain other components besides the polyamide resin and the continuous reinforcing fibers.

As the other components, additives, such as thermoplastic resins other than the polyamide resin, fillers besides the continuous reinforcing fibers, nucleating agents, antioxidants, stabilizers such as a thermal stabilizer, hydrolysis-resistance improving agents, weather resistant stabilizers, matting agents, UV absorbers, nucleating agents, plasticizers, dispersants, flame retardants, antistatic agents, anti-coloration agents, anti-gelling agents, colorants, and release agents may be added. For details of these other components, reference can be made to the descriptions in paragraphs [0130] to [0155] of JP 4894982 B and the descriptions in paragraphs [0047] to [0103] of WO 2021/241471, the contents of which are incorporated herein by reference.

When the fiber-reinforced composite material of the present embodiment contains other components, it is preferable to meltknead the other components with the polyamide resin to form a polyamide resin composition, and then form a composite material with the continuous reinforcing fibers. For details on the polyamide resin composition, reference can be made to the description in paragraph [0044] of WO 2023/188549, the content of which is incorporated herein by reference.

The content of these other components is preferably less than 10 mass%, more preferably less than 5 mass%, still more preferably less than 3 mass%, and yet even more preferably less than 1 mass% of the fiber-reinforced composite material.

The fiber-reinforced composite material of the present embodiment may be configured to be substantially free of a colorant. The phrase "substantially free" means that the content of colorants in relation to 100 parts by mass of the polyamide resin contained in the fiber-reinforced composite material is less than 0.01 parts by mass, and the content thereof is preferably less than 0.005 parts by mass, and more preferably less than 0.001 parts by mass.

The fiber-reinforced composite material of the present embodiment may be configured to be substantially free of a phenylene benzimidazole perylene compound. The phrase "substantially free" means that the content of a phenylene benzimidazole perylene compound in relation to 100 parts by mass of the polyamide resin contained in the fiber-reinforced composite material is less than 0.01 parts by mass, and the content thereof is preferably less than 0.005 parts by mass, and more preferably less than 0.001 parts by mass.

In the fiber-reinforced composite material of the present embodiment, the total of the polyamide resin and the continuous reinforcing fibers preferably accounts for 90 mass% or more of the fiber-reinforced composite material, and more preferably 95 mass% or more, and may account for 99 mass% or more, or may be 100 mass% or less.

### <Fiber-Reinforced Composite Material>

In the fiber-reinforced composite material of the present embodiment, the continuous reinforcing fibers are impregnated with the polyamide resin.

That is, an example of the fiber-reinforced composite material of the present embodiment is a prepreg. In the prepreg, the continuous reinforcing fibers may be oriented in one direction and impregnated with the polyamide resin, or the continuous reinforcing fibers may be a woven fabric and impregnated with the polyamide resin.

In the continuously-reinforced composite material, the impregnation rate of the polyamide resin in the continuous reinforcing fibers is preferably 90% or greater, and more preferably 95% or greater. The upper limit thereof is preferably 100%.

### <<Method of Measuring Impregnation Rate>>

For a commingled yarn, a cross-section perpendicular to the longitudinal direction of the continuous reinforcing fibers is cut out and embedded in an epoxy resin, a surface corresponding to the cross-section of the commingled fiber yarn is polished, and the cross-section is photographed using an ultra-deep color 3D shape measuring microscope. The cross-section of the commingled yarn embedded in the epoxy resin is then observed with a digital microscope. In the obtained cross-sectional image, a region in which the continuous reinforcing fibers are impregnated with thermoplastic resin fibers (region in which the thermoplastic resin fibers are melted and impregnated into the continuous reinforcing fibers) is selected using the image analysis software ImageJ, and the surface area of the region thereof is measured. The impregnation rate is expressed as the (region in which the continuous reinforcing fibers are impregnated with the thermoplastic resin)/(cross-sectional surface area) (unit: %).

The VK-9500 (controller part)/VK-9510 (measurement part) (available from Keyence Corporation) is used as the ultra-deep color 3D shape measuring microscope.

### <Applications of Fiber-Reinforced Composite Material>

As indicated above, the fiber-reinforced composite material of the present embodiment can be preferably used as a prepreg.

Additionally, the fiber-reinforced composite material of the present embodiment can be preferably used as a unidirectional (UD) tape. The fiber-reinforced composite material of the present embodiment may be wound onto a core material during storage, shipping, or the like. That is, the fiber-reinforced composite material of the present embodiment may also be a wound body having a core material and the fiber-reinforced composite material wound onto the core material.

The fiber-reinforced composite material of the present embodiment may be processed and molded as is, or a plurality of layers may be laminated, and then processed and molded. That is, the form of a formed article formed from the fiber-reinforced composite material is not particularly defined.

Examples thereof include a method for producing a formed article, the method including producing a fiber-reinforced composite material, and then laminating and heating a plurality of the fiber-reinforced composite materials, and a formed article obtained by this method for producing a formed article. The thickness of the thinnest portion of such a formed article can be appropriately determined according to the application or the like, but can be, for example, from 1 mm to 10 mm.

The fiber-reinforced composite material of the present embodiment also includes, for example, a formed article obtained by alternately laminating a polyamide resin film and a woven fabric of continuous reinforcing fibers and then heating and pressurizing the laminate.

The fields of application of the fiber-reinforced composite material of the present embodiment are not particularly defined, and the fiber-reinforced composite material of the present embodiment can be widely used in applications such as components for automobiles and other such transportation devices, general mechanical components, precision mechanical components, electronic and electrical device components, OA device components, building materials and building-related components, medical devices, leisure sporting goods, gaming devices, medical products, food packaging films and other such daily necessities, and defense and aerospace products.

### Examples

Hereinafter, the present invention will be described more specifically with reference to examples. The materials, usage amounts, proportions, processing details, processing procedures, and the like described in the examples below may be changed, as appropriate, as long as there is no deviation from the spirit of the present embodiment. Therefore, the scope of the present embodiment is not limited to the specific examples described below.

When, due to discontinuation or the like, it is difficult to obtain a measuring instrument or the like used in the Examples, another instrument having equivalent performance can be used for the measurements.

### <Raw Materials>

Continuous carbon fibers: PYROFIL (trade name) TR3523, available from Mitsubishi Chemical Corporation
Shorts fibers (carbon fibers): TR50S, available from Mitsubishi Chemical Corporation, cut length (number average fiber length) of 12 mm
MP12 (30): A polyamide resin synthesized according to Synthesis Example 1 described below
MP12 (40): A polyamide resin synthesized according to Synthesis Example 2 described below
MP14 (30): A polyamide resin synthesized according to Synthesis Example 3 described below
MXD12: A polyamide resin synthesized according to Synthesis Example 4 described below
PXD12: A polyamide resin synthesized according to Synthesis Example 5 described below
PA6: Polyamide 6, CM1017, available from Toray Industries, Inc.
PA66: Polyamide 66, CM3001, available from Toray Industries, Inc.
PA12: Polyamide 12, UBESTA, available from Ube Industries, Ltd.
MP10 (30): A polyamide resin synthesized according to Synthesis Example 6 described below

### <Synthesis Example 1: Synthesis of MP12 (30)>

Dodecanedioic acid was inserted into a jacketed reactor equipped with an agitator, a partial condenser, a cooler, a thermometer, a dropping funnel, and a nitrogen gas introduction tube, the reactor was sufficiently purged with nitrogen, and the dodecanedioic acid was heated and melted at 180°C, after which the temperature was raised to 290°C while stirring the contents and gradually adding dropwise a mixed amine (MPXDA available from Mitsubishi Gas Chemical Co., Inc.) of meta-xylylenediamine and para-xylylenediamine (70:30) such that the molar ratio with the dodecanedioic acid became 1:1. After completion of the dropwise addition, the liquid temperature of 290°C was maintained to continue the reaction for 10 minutes. Subsequently, the internal pressure of the reaction system was continuously reduced to 600 Torr over 10 minutes, after which the reaction was continued for 20 minutes. During this, the reaction temperature was continuously raised to 300°C. After completion of the reaction, the inside of the reactor was pressurized with nitrogen gas to 0.3 MPa, the polymer was extracted as a strand from a nozzle at a lower part of a polymerization tank and cooled with water, and the strand was then pelletized with a pelletizer to obtain pellets.

### <Synthesis Example 2: Synthesis of MP12 (40)>

Dodecanedioic acid was inserted into a jacketed reactor equipped with an agitator, a partial condenser, a cooler, a thermometer, a dropping funnel, and a nitrogen gas introduction tube, the reactor was sufficiently purged with nitrogen, and the dodecanedioic acid was heated and melted at 180°C, after which the temperature was raised to 290°C while stirring the contents and gradually adding dropwise a mixed amine (MXDA available from Mitsubishi Gas Chemical Co., Inc., PXDA available from Showa Denko K.K.) of meta-xylylenediamine and para-xylylenediamine (60:40) such that the molar ratio with the dodecanedioic acid became 1:1. After completion of the dropwise addition, the liquid temperature of 290°C was maintained to continue the reaction for 10 minutes. Subsequently, the internal pressure of the reaction system was continuously reduced to 600 Torr over 10 minutes, after which the reaction was continued for 20 minutes. During this, the reaction temperature was continuously raised to 300°C. After completion of the reaction, the inside of the reactor was pressurized with nitrogen gas to 0.3 MPa, the polymer was extracted as a strand from a nozzle at a lower part of a polymerization tank and cooled with water, and the strand was then pelletized with a pelletizer to obtain pellets.

### <Synthesis Example 3: Synthesis of MP14 (30)>

In a jacketed reactor equipped with an agitator, a partial condenser, a cooler, a thermometer, a dropping funnel, and a nitrogen gas introduction tube, 60 mol of precisely weighed tetradecanedioic acid was inserted, then the reactor was sufficiently purged with nitrogen and the temperature was raised to 180°C under a small amount of a nitrogen gas stream, and thus the tetradecanedioic acid was dissolved to form a uniform fluidized state. To this, a mixed amine (MXDA available from Mitsubishi Gas Chemical Co., Inc., PXDA available from Showa Denko K.K.) of meta-xylylenediamine and para-xylylenediamine (70:30) was gradually added dropwise over 160 minutes such that the molar ratio of the mixed amine to the tetradodecanedioic acid became 1:1. During this, the internal pressure of the reaction system was at normal pressure, and the internal temperature was continuously raised to 240°C. The water that distilled out along with the dropwise addition of the para-xylylenediamine and meta-xylylenediamine was removed from the system through the partial condenser and the cooler. After completion of the dropwise addition of the para-xylylenediamine and meta-xylylenediamine, the liquid temperature of 240°C was maintained to continue the reaction for 10 minutes. Subsequently, the internal pressure of the reaction system was continuously reduced to 600 Torr over 10 minutes, after which the reaction was continued for 20 minutes. During this, the reaction temperature was continuously raised to 250°C. After completion of the reaction, the inside of the reactor was pressurized with nitrogen gas to 0.3 MPa, the polymer was extracted as a strand from a nozzle at a lower part of a polymerization tank and cooled with water, after which the strand was cut into a pellet shape, and thereby pellets of a melt polymerization product were obtained.

### <Synthesis Example 4: Synthesis of MXD12>

Dodecanedioic acid was inserted into a jacketed reactor equipped with an agitator, a partial condenser, a cooler, a thermometer, a dropping funnel, and a nitrogen gas introduction tube, the reactor was sufficiently purged with nitrogen, and the dodecanedioic acid was heated and melted at 180°C, after which the temperature was raised to 290°C while stirring the contents and gradually adding meta-xylylenediamine (MXDA available from Mitsubishi Gas Chemical Co., Inc.) dropwise such that the molar ratio with the dodecanedioic acid became 1:1. The liquid temperature of 290°C was maintained to continue the reaction for 10 minutes. Subsequently, the internal pressure of the reaction system was continuously reduced to 600 Torr over 10 minutes, and then the reaction was continued for 20 minutes. During this, the reaction temperature was continuously raised to 300°C. After completion of the reaction, the inside of the reactor was pressurized with nitrogen gas to 0.3 MPa, the polymer was extracted as a strand from a nozzle at a lower part of a polymerization tank and cooled with water, and the strand was then pelletized with a pelletizer to obtain pellets.

### <Synthesis Example 5: Synthesis of PXD12>

Dodecanedioic acid was inserted into a jacketed reactor equipped with an agitator, a partial condenser, a cooler, a thermometer, a dropping funnel, and a nitrogen gas introduction tube, the reactor was sufficiently purged with nitrogen, and the dodecanedioic acid was heated and melted at 180°C, after which the temperature was raised to 290°C while stirring the contents and gradually adding para-xylylenediamine (PXDA available from Showa Denko K.K.) dropwise such that the molar ratio with the dodecanedioic acid became 1:1. The temperature was raised to 290°C. The liquid temperature of 290°C was maintained to continue the reaction for 10 minutes. Subsequently, the internal pressure of the reaction system was continuously reduced to 600 Torr over 10 minutes, and then the reaction was continued for 20 minutes. During this, the reaction temperature was continuously raised to 300°C. After completion of the reaction, the inside of the reactor was pressurized with nitrogen gas to 0.2 MPa, the polymer was extracted as a strand from a nozzle at a lower part of a polymerization tank and cooled with water, and the strand was then pelletized with a pelletizer to obtain pellets.

### <Synthesis Example 6: Synthesis of MP10 (30)>

Sebacic acid was inserted into a jacketed reactor equipped with an agitator, a partial condenser, a cooler, a thermometer, a dropping funnel, and a nitrogen gas introduction tube, the reactor was sufficiently purged with nitrogen, and the sebacic acid was heated and melted at 170°C, and after which the temperature was raised to 240°C while stirring the contents and gradually adding dropwise a mixed amine (MPXDA available from Mitsubishi Gas Chemical Co., Inc.) of meta-xylylenediamine and para-xylylenediamine (70:30) such that the molar ratio with sebacic acid became 1:1. After the completion of the dropwise addition, the temperature was increased to 260°C, and the reaction was continued for 20 minutes. Subsequently, the internal pressure of the reaction system was continuously reduced to 0.08 MPa, and the reaction was continued. After completion of the reaction, the inside of the reactor was pressurized with nitrogen gas to 0.2 MPa, the polymer was extracted as a strand from a nozzle at a lower part of a polymerization tank and cooled with water, and the strand was then pelletized with a pelletizer to obtain pellets.

### <Melting Point of Polyamide Resin>

The melting point (Tm) of the polyamide resin was measured by differential scanning calorimetry (DSC) in accordance with ISO11357, unless otherwise stated.

Specifically, a differential scanning calorimeter was used, and the resin was placed in a measuring pan of the differential scanning calorimeter, and subjected to a pretreatment of heating to a temperature exceeding the melting point at a temperature increase rate of 10°C/min under a nitrogen atmosphere and then performing rapid cooling, after which the measurement was performed. As the measurement conditions, the temperature was increased to 280°C at a temperature increase rate of 10°C/min and then maintained at 280°C for 5 minutes, after which the temperature was reduced to 100°C at a temperature decrease rate of -5°C/min, and the measurement was then performed to determine the melting point (Tm).

The differential scanning calorimeter that was used was the "DSC-60" available from Shimadzu Corporation.

The melting points of the polyamide resins used in the examples and comparative examples are described in Tables 1 and 2.

### Example 1

### <Production of Fiber-Reinforced Composite Material>

A fiber-reinforced composite material was produced using continuous carbon fibers and a thermoplastic resin of the type described in Table 1. Specifically, a thermoplastic resin was processed into a 100 µm thermoplastic resin film, and then a carbon fiber woven fabric and the thermoplastic resin film were alternately stacked thereon (with the uppermost layer being the thermoplastic resin film). A pressure of 3 MPa was then applied at a temperature of 20°C higher than the melting point of the thermoplastic resin, and thereby a formed article having a thickness defined by various standards described later was produced. The thickness was adjusted by adjusting the number of the carbon fiber woven fabrics and thermoplastic resin films to be stacked. The proportion of the carbon fibers in 100 mass% of the obtained fiber-reinforced composite material was 60 mass%. The obtained formed article was cut with an electric saw into sizes (length and width) conforming to the various standards described below.

### <Flexural Properties>

The formed article (thickness: 3.9 mm) obtained above was cut to a size (length and width) specified by the ASTM D790 standard, and the flexural strength (unit: MPa) and flexural modulus (unit: GPa) were measured in accordance with ASTM D790 at a temperature of 23°C and a relative humidity of 50% (initial flexural properties).

Further, the test piece was immersed in water at 23°C for 120 days, after which the water on the surface was wiped off, and the flexural strength was measured in the same manner as described above.

The reduction in flexural strength after water absorption in relation to the initial flexural strength was calculated according to the following equation. 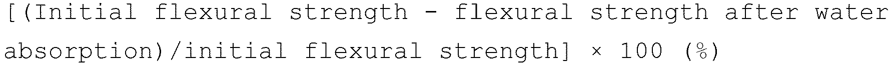 [(Initial flexural strength - flexural strength after water absorption)/initial flexural strength] × 100 (%)

### <Interlaminar Shear Strength>

The formed article (thickness of 2 mm) obtained above was cut to a size (length and width) specified by the JIS K7078 (1991) standard, and the interlaminar shear strength was measured in accordance with JIS K7078 (1991).

Further, the test piece was immersed in water at 23°C for 120 days, after which the water on the surface was wiped off, and the interlaminar shear strength was measured in the same manner as described above.

The reduction in interlaminar shear strength after water absorption in relation to the initial interlaminar shear strength was calculated according to the following equation. 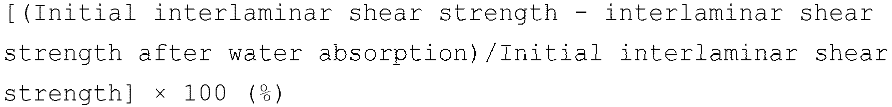 [(Initial interlaminar shear strength - interlaminar shear strength after water absorption)/Initial interlaminar shear strength] × 100 (%)

The interlaminar shear strength was measured using the "Autograph" AG100kNX (class 1, 1/1000 guaranteed type) available from Shimadzu Corporation.

### <Water Absorption Rate (After 120 days of immersion in 23°C water)>

The formed article (thickness of 2 mm) obtained above was cut to a length of 50 mm and a width of 20 mm, and immersed in water at 23°C for 120 days, after which the water on the surface was wiped off, and the mass of test piece was measured. The water absorption rate was calculated from the following equation. 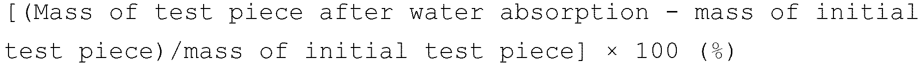 [(Mass of test piece after water absorption - mass of initial test piece)/mass of initial test piece] × 100 (%)

### Examples 2 to 5 and Comparative Examples 1 to 4

Fiber-reinforced composite materials were produced and analyzed in the same manner as in Example 1 with the exception that the type of resin fibers was changed as indicated in Table 1 or Table 2.

### Comparative Example 5

### <Production of Nonwoven Fabric>

Carbon fibers and resin fibers were each cut to a fiber length of 12 mm. The cut fibers were dispersed in water, thoroughly mixed, and then scooped up with a wire mesh to form a sheet. The obtained sheet was dried with hot air at 80°C to obtain a nonwoven fabric having a basis weight of 80 gsm.

### <Molding of Nonwoven Fabric>

A plurality of the nonwoven fabrics obtained above were stacked and press molded under a pressure of 3 MPa and at a temperature of 20°C above the melting point of the thermoplastic resin, and a formed article having a thickness of 3 mm was obtained. The obtained formed article was cut into test pieces of the same sizes as the test pieces used to measure the flexural properties, interlaminar shear strength, and water absorption rate described in Example 1, and was evaluated in the same manner as in Example 1.

The proportion of carbon fibers in 100 mass% of the obtained fiber-reinforced composite material was 62 mass%.

**[Table 1]**

| | | Example 1 | Example 2 | Example 3 | Example 4 | Example 5 |
|---|---|---|---|---|---|---|
| Type of resin in fiber-reinforced composite material | | MP12 (30) | MP12 (40) | MP14 (30) | MXD12 | PXD12 |
| Melting point | °C | 206 | 223 | 200 | 186 | 269 |
| Flexural strength (initial) | MPa | 738 | 715 | 651 | 741 | 691 |
| Flexural modulus (initial) | GPa | 40 | 39 | 35 | 41 | 36 |
| Interlaminar shear strength (initial) | MPa | 51 | 50 | 45 | 48 | 47 |
| Water absorption rate (after 120 days of immersion in 23°C water) | % | 1.4 | 1.3 | 0.9 | 1.5 | 1.3 |
| Decrease in flexural strength after water absorption | % | 3.8 | 3.3 | 2.2 | 2.9 | 3.5 |
| Decrease in interlaminar shear strength after water absorption | % | 3.6 | 3.1 | 2.0 | 2.8 | 3.3 |

**[Table 2]**

| | | Comparative Example 1 | Comparative Example 2 | Comparative Example 3 | Comparative Example 4 | Comparative Example 5 |
|---|---|---|---|---|---|---|
| Type of resin in fiber-reinforced composite material | | PA6 | PA66 | PA12 | MP10 (30) | MP12 (30) |
| Melting point | °C | 220 | 265 | 179 | 215 | 206 |
| Flexural strength (initial) | MPa | 598 | 620 | 482 | 782 | 355 |
| Flexural modulus (initial) | GPa | 32 | 34 | 28 | 43 | 23 |
| Interlaminar shear strength (initial) | MPa | 38 | 37 | 31 | 53 | 22 |
| Water absorption rate (after 120 days of immersion in 23°C water) | % | 9.1 | 7.6 | 1.4 | 2.5 | 1.4 |
| Decrease in flexural strength after water absorption | % | 27.3 | 24.5 | 2.5 | 7.8 | 3.5 |
| Decrease in interlaminar shear strength after water absorption | % | 23.2 | 22.9 | 1.8 | 6.9 | 5.2 |

As is clear from the above results, the formed articles (Examples 1 to 5) formed from the fiber-reinforced composite material of the present invention exhibited high initial interlaminar shear strength, and were able to effectively suppress a decrease in interlaminar shear strength after water absorption. In addition, both the initial flexural strength and the flexural strength after water absorption were high.

In contrast, the formed articles (Comparative Example 1 and Comparative Example 2) formed from the fiber-reinforced composite materials obtained using polyamide 6 or polyamide 66 exhibited a significant decrease in the interlaminar shear strength after water absorption.

In addition, the formed article (Comparative Example 3) formed from the fiber-reinforced composite material obtained using polyamide 12 exhibited a low initial shear strength.

Moreover, the formed article (Comparative Example 4) formed from the fiber-reinforced composite material obtained using the polyamide formed from sebacic acid and xylylenediamine exhibited a good balance in the physical properties at the initial stage and after water absorption as compared with Comparative Examples 1 to 3, but these properties were significantly inferior to those of the present invention.

Meanwhile, even with the fiber-reinforced composite material obtained using the polyamide resin specified in the present invention, when short fibers were used (Comparative Example 5), while the flexural strength after water absorption was successfully maintained at a high level, the shear strength after water absorption was significantly inferior in comparison to that of the present invention in which continuous fibers were used.

In particular, it was found that although Example 1 and Comparative Example 4 were the same with the exception of whether the dicarboxylic acid in the polyamide resin was dodecanedioic acid or sebacic acid, there was a large difference in the reduction of the interlaminar shear strength after water absorption.

## Claims

1. A fiber-reinforced composite material comprising from 100 to 200 parts by mass of continuous reinforcing fibers per 100 parts by mass of a polyamide resin, wherein
the polyamide resin contains diamine units and dicarboxylic acid units,
70 mol% or more of the diamine units are derived from a xylylenediamine, and
70 mol% or more of the dicarboxylic acid units are derived from an α,ω-linear aliphatic dicarboxylic acid having from 11 to 20 carbons.

2. The fiber-reinforced composite material according to claim 1, wherein 70 mol% or more of the dicarboxylic acid units are derived from dodecanedioic acid and/or tetradecanedioic acid.

3. The fiber-reinforced composite material according to claim 1, wherein 70 mol% or more of the dicarboxylic acid units are derived from dodecanedioic acid.

4. The fiber-reinforced composite material according to any one of claims 1 to 3, wherein from 20 to 100 mol% of the diamine units are derived from meta-xylylenediamine, and from 80 to 0 mol% of the diamine units are derived from para-xylylenediamine (provided that a total does not exceed 100 mol%).

5. The fiber-reinforced composite material according to claim 1, wherein 70 mol% or more of the dicarboxylic acid units are derived from dodecanedioic acid and/or tetradecanedioic acid, and
from 20 to 100 mol% of the diamine units are derived from meta-xylylenediamine, and from 80 to 0 mol% of the diamine units are derived from para-xylylenediamine.

6. The fiber-reinforced composite material according to any one of claims 1 to 5, wherein the continuous reinforcing fibers contain at least one type selected from the group consisting of carbon fibers, glass fibers, and aramid fibers.

7. The fiber-reinforced composite material according to any one of claims 1 to 6, wherein the continuous reinforcing fibers have a number average fiber length of more than 10 mm.

8. The fiber-reinforced composite material according to any one of claims 1 to 7, wherein the fiber-reinforced composite material is a prepreg.

9. The fiber-reinforced composite material according to claim 8, wherein the fiber-reinforced composite material is a prepreg in which the continuous reinforcing fibers are oriented in one direction, and the continuous reinforcing fibers are impregnated with the polyamide resin.

10. The fiber-reinforced composite material according to claim **8,** wherein the fiber-reinforced composite material is a prepreg in which the continuous reinforcing fibers are a woven fabric, and the continuous reinforcing fibers are impregnated with the polyamide resin.

11. A formed article formed from the fiber-reinforced composite material described in any one of claims 1 to 10.
